## Europäisches Patentamt

(19) **European Patent Office**

**Office européen des brevets**

(11) Veröffentlichungsnummer: **0 130 278**
**B1**

(12) **EUROPÄISCHE PATENTSCHRIFT**

(45) Veröffentlichungstag der Patentschrift:
**01.06.88**

(21) Anmeldenummer: **84103270.9**

(22) Anmeldetag: **24.03.84**

(51) Int. Cl.⁴: **A 23 G 1/12**

(30) Priorität: **29.06.83 IT 2185783**

(43) Veröffentlichungstag der Anmeldung:
**09.01.85 Patentblatt 85/2**

(45) Bekanntmachung des Hinweises auf die Patenterteilung:
**01.06.88 Patentblatt 88/22**

(84) Benannte Vertragsstaaten:
**CH DE FR GB LI SE**

(56) Entgegenhaltungen:
**EP - A - 0 017 342**
**BE - A - 416 105**
**DE - A - 3 016 785**
**DE - C - 764 930**
**FR - A - 804 970**
**FR - A - 1 028 098**
**FR - A - 2 424 065**
**FR - A - 2 464 750**
**FR - A - 2 512 691**
**GB - A - 2 090 770**
**US - A - 2 992 866**
**US - A - 3 066 876**
**US - A - 4 182 259**

(73) Patentinhaber: **CARLE & MONTANARI S.p.A., Via Neera 39, I-20141 Milano (IT)**

(72) Erfinder: **Ripani, Sergio, Viale G. da Cermenate, 35/A, I-20141 Mailand (IT)**
Erfinder: **Serafini, Giulio, Via Montemartini, 6, I-20139 Mailand (IT)**

(74) Vertreter: **de Dominicis, Silvia Giovanna et al, de Dominicis & Partners s.a.s. Via Brera 6, I-20121 Milano (IT)**

(54) **Walzenreibmaschine mit regelbarer Betriebsweise für Schokolade.**

# Beschreibung

Vorliegende Erfindung bezieht sich auf eine Walzenreibmaschine mit regelbarer Betriebsweise für Schokolade.

Wie an sich schon bekannt, dienen die Walzenreibmaschinen dazu, der Schokolade die vorbestimmte Einheit bzw. Granulometrie sowie die grösstmögliche Homogenität zu verleihen. Der Wert der gewünschten Feinheit hängt von der nachfolgenden Verwendung der Schokolade ab. Für sehr feine Schokoladenprodukte sind Feinheitsgrade in der Grössenordnung von 15–30 µm gewöhnlich. Um solche Feinheit zu erzielen, wird die Schokolade hintereinander in einer Anzahl von Raffinierwalzen gedrückt, die hintereinander auf eine gefederte Weise gelagert sind, wobei das Eingangspaar das Einzugswalzenpaar und die letzte Raffinierwalze die Austragswalze bilden. Bei den bekannten Maschinen ist es möglich, den Druck auf die einzelnen Raffinierwalzen entweder auf die einzelnen Raffinierwalzen oder auf alle durch Adhaesion von einer zur nachfolgenden Raffinierwalze gefördert, wobei beim Durchlaufen der Schokoladenbahn zwischen jeweils zwei benachbarten Raffinierwalzen dieselben voneinander entfernt werden. Die Raffinierwalzengeschwindigkeit nimmt vom Einzugswalzenpaar gegen die Austragswalze hin zu. Dagegen nimmt die Dicke der Schokoladenbahn vom Einzugswalzenpaar (mit einem Wert von z.B. 100–400 µm) gegen die Austragwalze hin (mit einem Wert von z.B. 15–30 µm) ab. Die Raffinierwirkung besteht aus einer Druck- bzw. Zerquetschwirkung gleichzeitig mit einer Streckungs- bzw. Scherwirkung auf der Schokoladenbahn zusammen. Die Raffinierwalzen weisen zur Zeit beträchtliche Walzenlängen, z.B. bis zu 2 m auf. Mit solchen Raffinierwalzen ist es besonders schwer, solche dünnen Dicken auf so grossen Breiten gleichmässig aufrechtzuerhalten.

Es ist schon bekannt, die Dicke des ausgetragenen Schokoladenfilms zu beeinflussen, indem man auf den Raffinierwalzendruck und insbesondere auf den Druck der Einzugswalzen einwirkt.

Dadurch, dass während des Raffiniervorganges sehr hohe Druckwerte zwischen den Raffinierwalzen eingesetzt werden, neigen die Oberflächen der Raffinierwalzen im Bereich der entgegengesetzten Erzeugenden sich nach innen zu biegen, wodurch der sich zwischen den Walzen einstellende Luftspalt im mittleren Bereich einen grösseren Wert als an den Walzenenden zwangsläufig aufweist. Dieser Effekt ist ferner deshalb ziemlich geprägt, weil die Raffinierwalzen hohl ausgeführt sind, um somit in der Lage zu sein, ein Kühlmittel zu führen, das dem Abführen der während des Raffiniervorganges entstehenden Wärme dient. Um dieser Einbauchung entgegenzuwirken, ist es bekannt, schon im voraus eine bestimmte Ausgleichballigkeit aufweisende Raffinierwalzen herzustellen. Diese zusätzliche Balligkeit wird während des Raffiniervorganges durch einen bestimmten Arbeitsdruck in Anwesenheit einer eine bestimmte Viskosität aufweisenden Schokolade ausgeglichen werden. Deshalb werden die bisherigen Walzenreibmaschinen für bestimmte Dicken des ausgetragenen Schokoladenfilms hergestellt. Beim Variieren der Viskosität der zu behandelnden Schokolade, z.B. beim Übergehen von einer zur anderen Schokoladenbeschickung, versucht man, den gewünschten Feinheitsgrad aufrechtzuerhalten, indem man auf den Druck zwischen den Raffinierwalzen, die in verschiebbaren Halterungen im Walzenreibmaschinengestell getragen sind, eingreift.

In der Praxis hat man festgestellt, dass trotz der Möglichkeit, auf den Druck der Raffinierwalzenlager einzugreifen, es sehr schwierig ist, die gewünschten Feinheitsgrade beim Eintreten von Viskositätsänderungen der zu behandelnden Schokolade zu erreichen und aufrechtzuerhalten, und zwar insbesondere, wenn grosse Herstellungsleistungen gewünscht sind. Für jede Walzenreibmaschine werden üblicherweise die Balligkeitswerte für jede Raffinierwalze je nach der Erfahrung des Walzenherstellers in Abhängigkeit von den Eigenschaften der zu raffinierenden Schokolade bestimmt.

Aus den französischen Patenten FR-A 804 970 und FR-A 1 028 098 ist es ebenfalls bekannt, die mit Balligkeit ausgeführten Raffinierwalzen durch zylindrisch ausgeführte Raffinierwalzen zu ersetzen, die in ihrer Horizontalebene um ihre Längsachse schwenkbar gelagert sind, so dass eine der wirklichen Balligkeit gleichwertige Balligkeitswirkung der Raffinierwalzen erreicht wird, wobei verschiedenen Raffinierwalzenschwenklagen verschiedene Balligkeitswirkungen entsprechen.

Bei der FR-A 804 970 wird die genannte Schwenkbarkeit der Raffinierwalzen zur Verwendung im Falle von hohen Arbeitsdruckwerten oder zur Behandlung von sehr harten Produkten vorgeschlagen. Die Schwenkbarkeit der Raffinierwalzen wird durch manuelle Eingriffe auf schraubenartige Verstellmittel bewirkt, die einerseits den Raffinierwalzenendlagerungen zugeordnet und andererseits im Raffinierwalzengestell aufgenommen sind.

Beim Variieren der Balligkeitswerte ist es doch möglich, Schokoladenteige zu verarbeiten, deren Fettgehalte voneinander leicht abweichen, jedoch hat es sich ergeben, dass es durch Änderung der Balligkeitswerte nicht möglich ist, Schokoladenteige mit weit auseinanderliegenden Fettgehalten zu verarbeiten

Die Durchführung von Balligkeitsänderungen können ferner lediglich nach einer Laborfeststellung der Feinheit des ausgetragenen Produktfilms erfolgen.

Bei der FR-A 1 028 098 wird die Schwenkbarkeit der Raffinierwalzen zur Erzielung von äusserst kleinen Dickenwerten des ausgetragenen Produktfilms vorgeschlagen, wobei die Durchführung des Schwenkvorganges vom Bedienungsmann mittels einfacher Eingriffe zu bewirken ist.

Auch bei den Raffinierwalzen gemäss diesem Patent wird vorgesehen, lediglich die Balligkeitswerte zu ändern, wodurch die gleichen Einsetzungseinschränkungen der mit diesen schwenkbaren Raffinierwalzen versehenen Walzenreibmaschinen feststellbar sind, die oben für die verbesserten Walzenreibmaschinen gemäss dem französischen Patent FR-A 804 970 erwähnt sind.

Mit ein und derselben bekannten Walzenreibmaschine, die mit Balligkeit ausgeführte Raffinierwalzen oder schwenkbar gelagerte Raffinierwalzen aufweist, ist es deshalb nicht möglich, Schokoladenfilmfeinheiten zu erzielen, die vom Feinheitsgradbereich, für den die Walzenreibmaschine hergestellt wurde, wesentlich abweichen. Für sehr verschiedene Viskositätswerte aufweisende Schokoladenteige sind die Schokoladenprodukthersteller deshalb gezwungen, mehrere Walzenreibmaschinen zu beziehen. Z.B. sind in den USA sehr flüssige Schokoladenteige üblich, wogegen in Deutschland und in Griechenland voneinander sehr verschiedene Schokoladenteige verlangt werden. Obwohl dies an sich kein besonderes Hindernis für die grösseren Schokoladenprodukthersteller darstellt, kann diese Einsatzbegrenzung der bekannten Walzenreibmaschinen für die kleineren Schokoladenprodukthersteller oekonomisch untragbar sein, wodurch dieselben oft gezwungen sind, die Formulierung bzw. Zusammensetzung ihrer Schokoladenerzeugnisse sowie den technologischen Herstellungsvorgang zu modifizieren, um die Ausgangsschokoladensorten auf ihren Walzenreibmaschinen bearbeiten zu können. Dies wirkt sich oft auf die Eigenschaften der gefertigten Schokoladenerzeugnisse sehr nachteilig aus, weil die Veränderung des Fettprozentsatzes im Schokoladenteig, welches Fett oft aus Bearbeitungsgründen unentbehrlich ist, eine Beeinflussung des nachfolgenden Homogenisierungsvorganges mit sich bringt, der, wie an sich bekannt, dem Erzeugnis seinen Geschmack verleiht.

Wenn die vorbestimmte Walzenballigkeit es nicht gestattet, ein Produkt mit dem gewünschten Feinheitsgrad zu erhalten oder auch, wenn sich die Viskosität der jeweils bearbeiteten Schokolade ändert, versucht man zur Zeit als Alternative die gewünschten Ergebnisse zu erzielen, indem man mechanisch auf die Maschine eingreift. Solche Eingriffsmassnahmen zielen auf eine Veränderung der Raffinierwalzenballigkeit und -geschwindigkeit. Im ersten Fall ist es unentbehrlich, die ballig ausgeführten Raffinierwalzen abzumontieren, dieselben dem Walzenreibmaschinenhersteller zurückzusenden, wobei, nach erfolgter Ausbesserungsbearbeitung der Raffinierwalzen, dieselben zum Schokoladenprodukthersteller zurücktransportiert und danach in die Walzenreibmaschine eingebaut werden. Dies verlangt normalerweise eine Zeitspanne von mehreren Wochen. Im zweiten Falle, da die Geschwindigkeitsänderungen normalerweise an sich klein sind, ist es notwendig, die Zahnräder der Raffinierwalzen entweder zu modifizieren oder zu wechseln. Diese Zahnrädermodifizierungen bzw. -ersetzung werden jedoch empirisch je nach der Erfahrung des Walzenreibmaschinenbedienungsmannes ausgeführt, so dass der Erfolg dieser Massnahmen, die auf jeden Fall sehr kostspielig sind und viel Zeit in Anspruch nehmen, auch nicht von vornherein gewährleistet werden kann. Diese Eingriffe setzen ferner ein Anhalten der Walzenreibmaschine voraus und verursachen deshalb eine kostspielige Produktionsunterbrechung.

Der vorliegenden Erfindung liegt die Aufgabe zugrunde, eine Walzenreibmaschine für Schokolade zu schaffen, die in der Lage ist, die Behandlung von verschiedene Dicken aufweisenden Schokoladenbahnen bzw. -filmen in Anwesenheit von wesentlich verschiedenen Ausgangsviskositätswerten zu ermöglichen, wodurch die erfindungsgemässe Walzenreibmaschine als universelle Raffiniermaschine eingesetzt werden kann.

Im Rahmen obiger Aufgabe wird ferner eine Walzenreibmaschine mit automatischer Betriebsweise vorgeschlagen, d.h. eine Raffiniermaschine, die in der Lage ist, die kontinuierliche Herstellung von die gewünschte Feinheit aufweisenden Schokoladenfilmen in Anwesenheit von verschiedenen Sorten bzw. Formulierungen der Ausgangsschokolade bzw. von Abweichungen vom gewünschten Schokoladenfilm auf eine selbstregulierte Weise zu gestatten, wodurch mit ein und derselben Walzenreibmaschine es einerseits gelingt, praktisch jede Schokoladensorte zu raffinieren und bei einer gegebenen Schokoladensorte gelingt es andererseits die Walzenreibmaschine derart zu regeln, dass die gewünschten Produkt- und Betriebsweiseparameter erzielbar sind.

Die der vorliegenden Erfindung zugrunde gelegte Aufgabe wird nach der Lehre vorliegender Erfindung mittels einer Walzenreibmaschine für eine rheologische nicht-Newtonsche Kennlinie aufweisende Mischungen und Suspensionen, z.B. Schokoladen, Tinten, Lacke u.dgl., enthaltend, in einem Walzenreibmaschinengestell gelagert, ein Einzugswalzenpaar zur Zuführung des zu raffinierenden Schokoladenteigs sowie eine Vielzahl von Raffinierwalzen und Antriebsmittel für die letzteren gelöst, die dadurch gekennzeichnet ist, dass sie enthält:

a) Balligkeitsveränderungsmittel, die fähig sind, eine Veränderung der wirklichen Balligkeit bzw. einer gleichwertigen Balligkeitswirkung auf die Raffinierwalzen zu bewirken, wobei die Balligkeitsveränderungsmittel aus einer Schwenklagerungsvorrichtung einer zugeordneten Raffinierwalze bestehen, welche Schwenklagerungsvorrichtung fähig ist, der an und für sich ohne Balligkeit ausgeführten zugeordneten Raffinierwalze eine solche Schwenkbewegung zu erteilen, dass diese Raffinierwalze eine in bezug auf eine benachbarte Raffinierwalze winklige Stellung mit untereinander in Berührung kommenden mittleren Bereichen bzw. Kreislinien und voneinander entfernten Raffinierrollenden erfährt,

b) Geschwindigkeitsveränderungsmittel, die fähig sind, eine Geschwindigkeitsveränderung der genannten Raffinierwalzen zu bewirken, wobei dieselben für jede Raffinierwalze aus einem eigenen unabhängigen und für sich regelbaren Antrieb, wie z.B. ein mechanisches, stufenloses Getriebe, ein Gleichstrommotor, eine Ausdehnungsriemenscheibe usw. bestehen, und

c) Druckveränderungsmittel, die fähig sind, eine Druckveränderung bei den Halterungslagern der Raffinierwalzen zu bewirken, wobei den Balligkeits-, Geschwindigkeits- und Druckveränderungsmitteln Betätigungsmittel zur Einzel- bzw. Kombinationsdurchführung der erforderlichen Regeleingriffe auf die genannten Veränderungsmittel zur Veränderung des Druckes, der Geschwindigkeit und der Balligkeit der Raffinierwalzen zugeordnet sind, wobei Steuermittel mit Mikroprozessor zur zentralisierten Steuerung sowie Messvorrichtungen zur Messung eines Bezugsparameters, z.B. der Dicke oder Viskosität des erzeugten Schokoladenfilms vorzugsweise vorgesehen sind.

Weitere Ausführungsformen der vorliegenden Erfindung sind den Kennzeichen der abhängigen Ansprüche entnehmbar.

Zur Lösung der erwähnten Aufgabe nützt die Erfindung die Kenntnis, nicht nur auf den Druck zwischen den Raffinierwalzen, sondern gleichzeitig oder als Alternative ebenfalls auf die weiteren zwei Parameter, d.h. auf die Raffinierwalzenballigkeit und -geschwindigkeit einzugreifen, die, wie im Laufe von Experimenten festgestellt, den Feinheitsendwert beeinflussen.

Beim Eingreifen auf die erwähnten Parameter wird es vorteilhafterweise möglich jeweils die gewünschte Feinheit in Anwesenheit sehr hoher Produktionsleistungen zu erzielen.

Die Geschwindigkeitsveränderung der Raffinierwalze wird erfindungsgemäss dadurch erreicht, dass vorteilhafterweise jedem einzelnen Raffinierzylinder ein unabhängiger und beliebig regelbarer Antrieb zugeordnet wird, der z.B. aus einem mechanischen Getriebe oder aus einem Gleichstrommotor besteht. Es wäre ebenfalls möglich, Ausdehnungsriemenscheiben bzw. weitere an sich bekannte Vorrichtungen einzusetzen. Es wird hervorgehoben, dass es mit einer Veränderung der Geschwindigkeit der ersten Reibwalze des Einzugswalzenpaars gelingt, sowohl den Feinheitsendwert als auch die Herstellungsleistung pro Stunde zu beeinflussen. Es wird ferner betont, dass die Zunahme des Unterschieds zwischen den relativen Geschwindigkeiten zweier benachbarter Raffinierwalzen zu einem grösseren Raffinierungsgrad führt.

Erfindungsgemäss werden zur Durchführung der Balligkeitsveränderungen der schwenkbaren Raffinierwalzen Schwenklagervorrichtungen vorgeschlagen, die es erlauben, den Schwenkvorgang auf eine einfache, schnelle und zuverlässige Weise auszuführen.

Bezüglich des Druckes, kann derselbe vorteilhafterweise durch Verwendung von an sich bekannten Einrichtungen und Steuerkreisen variiert werden.

Erfindungsgemäss werden ferner die Eingriffe auf die Regelungsparameter und zwar auf den Raffinierwalzendruck sowie auf die Raffinierwalzenballigkeit und -geschwindigkeit automatisch mittels der Verwendung eines zwischengeschalteten Mikroprozessors bestimmt. Der Mikroprozessor verarbeitet die einen Bezugsparameter, z.B. die Dicke oder Feinheit des erzeugten Schokoladenfilms oder die Viskosität der zu raffinierenden Schokoladenladung darstellenden Eingangssignale und liefert den Regeleingriff auf den einen oder mehreren der Regelparameter bestimmenden Ausgangssignale. Die Dicke des erzeugten Schokoladenfilms kann indirekterweise mittels eines Kolorimeters, wie in der italienischen Patentanmeldung Nr. 20 718 A/83 der Anmelderin selbst offenbart, gemessen werden.

Dadurch, dass sich die Wirkungen der Regelung auf einen einzelnen Regelparameter, z.B. auf den Raffinierwalzendruck, -balligkeit oder -geschwindigkeit ebenfalls auf die anderen Parameter auswirkt und dieselben beeinflusst, wird die Wahl des bzw. der zu regelnden Parameters bzw. Parameter entweder manuell, im Falle einer Handregelung, und zwar gemäss Betriebsweisenkurven der Walzenreibmaschine oder direkt vom Mikroprozessor gemäss gespeicherten Bezugswerten bzw. spezifischen Programmen bestimmt.

Weitere Merkmale, Vorteile und Einzelheiten der erfindungsgemässen Walzenreibmaschine sind der nachfolgenden Beschreibung unter Bezugnahme auf die beigefügten Zeichnungen entnehmbar, die eine vorgezogene Ausführungsform einer erfindungsgemässen Walzenreibmaschine darstellen. Es zeigen schematisch:

Fig. 1 eine Ansicht von vorn zweier Raffinierwalzen bekannter Art;

Fig. 1a, 1b und 1c jeweils einen Querschnitt entlang der Schnittlinien 1a–1a und 1b–1b sowie eine Seitenansicht in Pfeilrichtung c;

Fig. 2 eine Ansicht von oben einer Anordnung zweier bekannter schwenkbarer Raffinierwalzen, die derart gegeneinander schwenkbar gelagert sind, dass zwischen denselben profilierte, den bekannten Balligkeiten der ballig ausgeführten Raffinierwalzen, gleichwertige Raffinierspalte entstehen;

Fig. 2a, 2b und 2c jeweils einen vertikalen Querschnitt entlang der Schnittlinien 2a–2a und 2b–2b sowie eine Seitenansicht in Pfeilrichtung c in Fig. 2;

Fig. 3 eine grundsätzliche Seitenansicht einer erfindungsgemässen Walzenreibmaschine;

Fig. 4 einen Querschnitt entlang der Schnittlinie IV–IV von Fig. 3;

Fig. 5a und 5b jeweils ein Detail in Seitenansicht zweier übereinanderliegender Raffinierwalzen, und zwar mit in gleicher vertikaler Ebene liegenden Längsachsen (Fig. 5a) und mit von dieser gemeinsamen vertikalen Ebene weggeschwenkten Längsachsen (Fig. 5b);

Fig. 6 eine grundsätzliche Seitenansicht einer erfindungsgemässen Walzenreibmaschine mit den grundsätzlichen Betriebskreisläufen;

Fig. 6a ein Detail in vergrössertem Massstab der Halterungsanordnung der ersten Einzugswalze des Einzugwalzenpaars, aufweisend eine nach einer Ausführungsvariante hergestellte Schwenklagerungsvorrichtung;

Fig. 6b in verkleinertem Massstab eine grundsätzliche Ansicht in Richtung des Pfeils A von Fig. 6a, wobei eine ausgeschwenkte Stellung der ersten Einzugswalze des Einzugswalzenpaares dargestellt wird;

Fig. 7 ein Kurvenbild, das die zwischen der Druckbelastung auf die Lager der Raffinierwalzen, der Raffinierwalzenballigkeit und dem Fettprozentsatz im Schokoladenteig, d.h. der Viskosität des letzteren bestehenden Verhältnisse prinzipiell darstellt;

Fig. 8 ein Kurvenbild, das das Variieren der Dikken des erzeugten Schokoladenfilms in bezug auf das Variieren der Drucke auf denselben in Walzenreibmaschinen mit fester Raffinierwalzenballigkeit darstellt;

Fig. 9 und 10 Kurvenbilder, die graphisch die zwischen den verschiedenen Schokoladen- und Betriebsweisenparametern bei einer bekannten Walzenreibmaschine mit festen Raffinierwalzengeschwindigkeit und -balligkeit (Fig. 9) und bei einer erfindungsgemässen Walzenreibmaschine (Fig. 10) bestehenden Verhältnisse darstellen;

Fig. 11 und 12 Kurvenbilder, die die zwischen der Raffinierwalzenballigkeit und der Schokoladenviskosität (Fig. 11) und zwischen der Walzenreibmaschinengeschwindigkeit und der -leistung (Fig. 12) bestehenden Verhältnisse darstellen.

Bei den verschiedenen Figuren weisen gleiche Bestandteile gleiche Bezugszeichen auf. Es wird zuerst auf den bekannten Stand der Technik bezuggenommen.

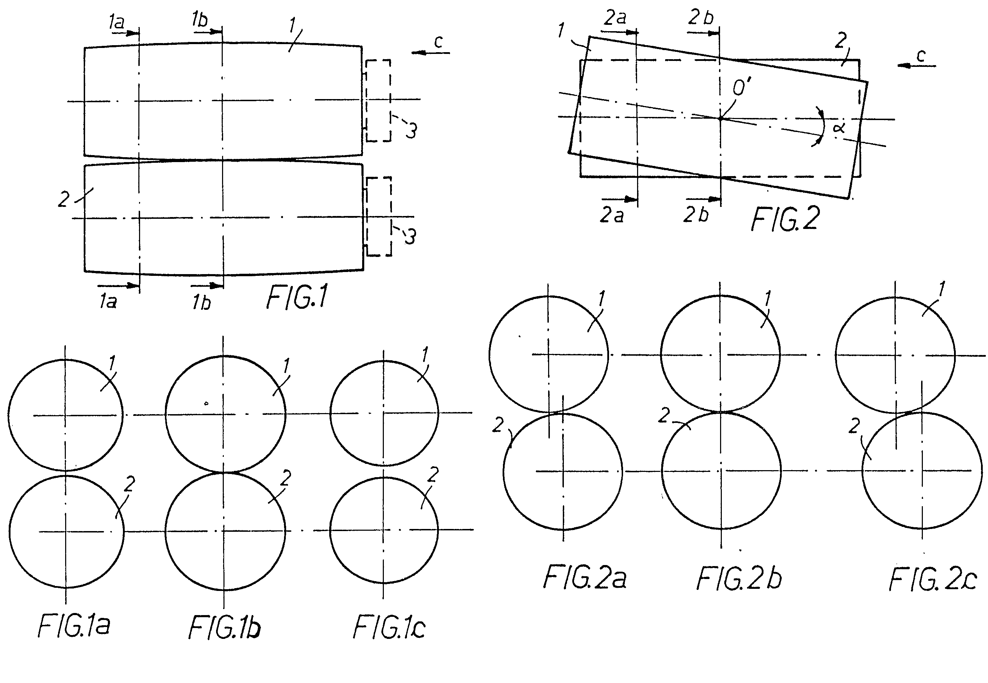

In der Fig. 1 sind mit 1 und 2 zwei nebeneinanderliegende Raffinierwalzen bezeichnet, die eine äussere profilierte bzw. ballige Umfangsfläche aufweisen, wobei dies deutlichkeitshalber auf übertriebene Weise dargestellt ist. Solche Profilierungen weisen im wesentlichen eine Gestaltung nach Art einer symmetrischen Parabel auf. Im dargestellten Beispiel weisen die beiden Raffinierwalzen 1 und 2 in der gleichen vertikalen Ebene liegende Längsachsen auf, wodurch sich, von oben gesehen, die Raffinierwalzen in Überdeckung befinden. Während die parabelartigen Profilierungen sich im mittleren Punkt O berühren, entfernen sie sich allmählich voneinander gegen die Raffinierwalzenenden hin. Diese Bedingung entspricht einer Bedingung ohne Belastung, d.h. ohne Druck auf die Lager der Raffinierwalzen. Unter Betriebsbedingungen wird der Druck auf die Lager der Raffinierwalzen ein Zerdrücken der parabelartigen Profilierung im Bereich der jeweils in Berührung kommenden Raffinierwalzenerzeugenden bewirken, wodurch es möglich ist, sich der Bildung des auf die Raffinierwalzenlänge möglicherweise gleichmässigen Raffinierwalzenspalt, d.h. der Schokoladenfilmdicke soweit wie möglich zu nähern. In Wirklichkeit, wie oben bereits erwähnt, kann dies mit einer festen Profilierung der Raffinierwalzen lediglich für einen sehr engen Dickenbereich und in Anwesenheit einer gleichmässigen Schokoladenviskosität sowie von gleichmässigen Betriebsweisenparametern wie Reibwalzengeschwindigkeit, Walzenreibmaschinenleistung usw. erzielt werden.

Um zu jeder Zeit die erforderliche Raffinierwalzenballigkeit für die jeweils betrachteten Betriebsumstände zur Verfügung zu haben, wird die Anwendung von Mitteln bzw. Einrichtungen vorgeschlagen, die fähig sind, eine Veränderung der Wirkung der wirklichen Balligkeit, d.h. der wirklichen auf den Raffinierwalzen messbaren Balligkeit, oder eine gleichwertige Balligkeit zu bewirken. Im ersten Falle wird die Anwendung von mit 3 in Fig. 1 angedeuteten Druckübersetzern vorgesehen, die auf den Druck der in den Raffinierwalzen enthaltenden Kühlflüssigkeit eingreifen. Nimmt der Druck der Kühlflüssigkeit zu, so nimmt der Wert der Walzenballigkeit ebenfalls zu und umgekehrt.

Eine vorteilhafte Veränderung einer gleichwertigen Balligkeit ist erfindungsgemäss mit einer Schwenklagerungsvorrichtung für die Raffinierwalzen, wie in Fig. 2 bis 6 dargestellt, erzielbar. Bei dieser Ausführungsform können die Raffinierwalzen genau zylindrisch ausgeführt werden, weil die Balligkeitswirkung mit dem Kunstgriff die beiden Raffinierwalzen gegeneinander schwenken zu lassen, indem man auf die eine oder auf beide Raffinierwalzen einwirkt, erreicht wird. Im dargestellten Beispiel befinden sich die Raffinierwalzen in Überdeckung und können in eigener horizontaler Ebene um die mit O' bezeichneten mittleren Vertikalachsen der genannten Raffinierwalzen geschwenkt werden. Zu jeder Veränderung des Verschwenkungswinkels der Raffinierwalzen entspricht eine Veränderung der Abstand zwischen den Mittelpunkten der endseitigen Walzenkreislinien, was proportional ebenfalls für die verschiedenen sich zwischen den mittleren und den endseitigen Kreislinien der Walzen befindenden Kreislinien erfolgt, wobei die mittleren Kreislinien immer in Berührung untereinander unabhängig vom gewählten Schwenkwinkel sind.

Solche Raffinierwalzen stellen deshalb wie an sich bekannt, Walzen mit «veränderbarer Walzenballigkeit» dar.

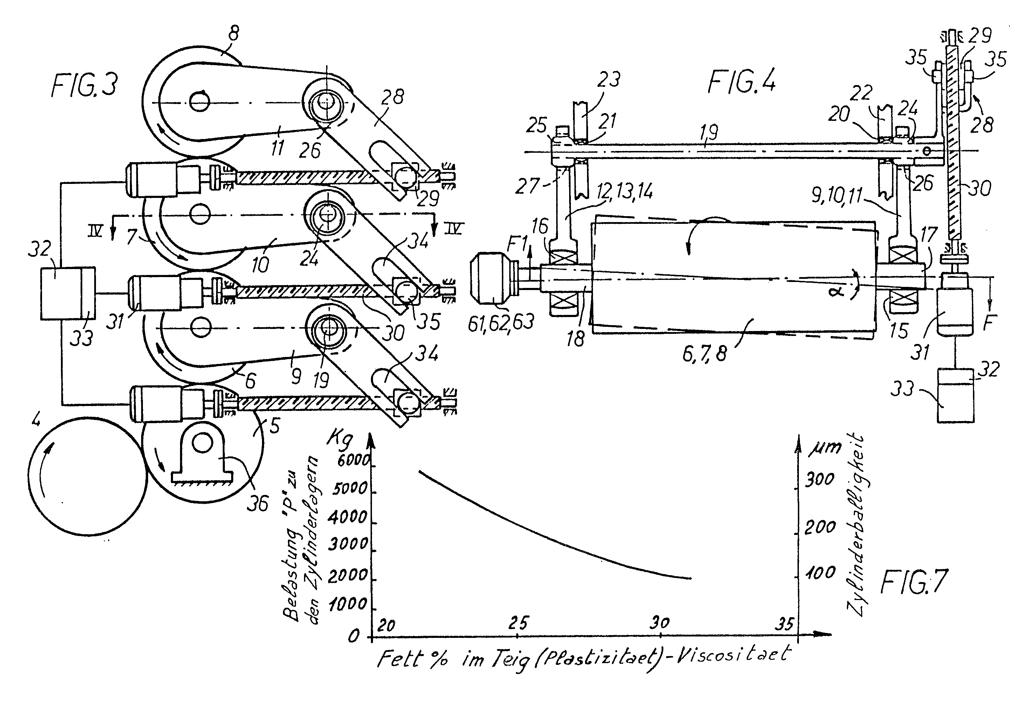

Die erfindungsgemässe Schwenklagerungsvorrichtung der Raffinierwalzen wird nun unter Bezugnahme auf die Fig. 3–6 näher beschrieben. Die Walzen der Walzenreibmaschine sind jeweils mit 4, 5, 6, 7 und 8 bezeichnet. Die Walzen 4 und 5 stellen die erste und die zweite Walze des Einzugswalzenpaars und die Walze 8 stellt die Austragswalze dar.

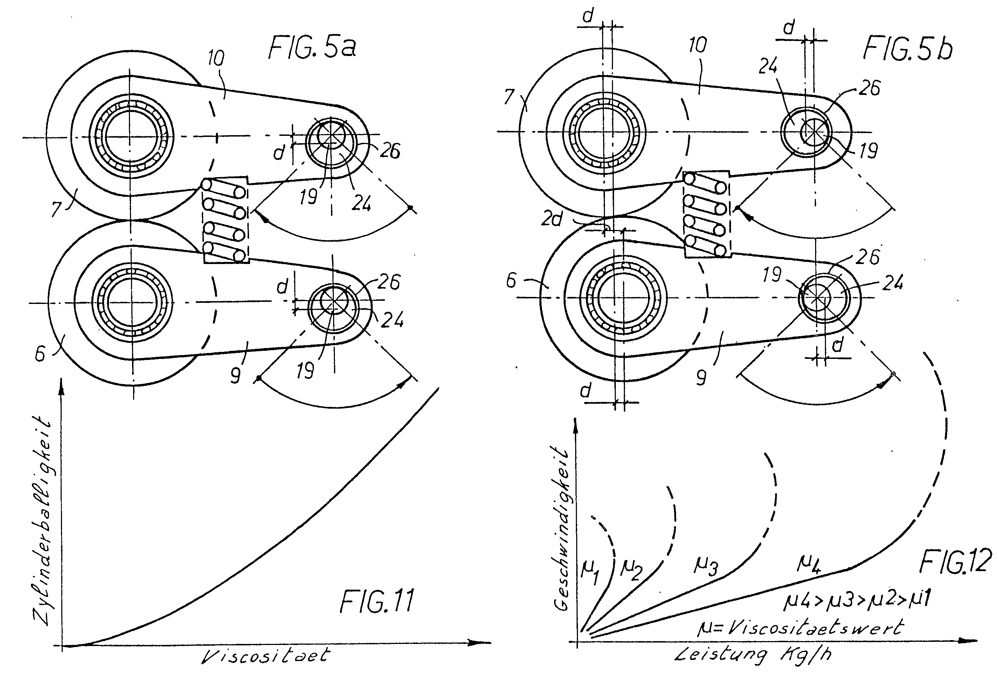

Im dargestellten Beispiel sind die Raffinierwalzen 6, 7 und 8 jeweils durch eine Lagerungsvorrichtung 9, 10, 11 auf der einen Seite und durch eine Lagerungsvorrichtung 12, 13, 14 auf der anderen Seite getragen. Wie insbesondere in Fig. 4 dargestellt, sind für die Raffinierwalzen 6, 7, 8 Lagerungsvorrichtungen gleicher Ausführung gewählt worden. Diese Lagerungsvorrichtungen nehmen die die Halterungsenden 17, 18 der Raffinierwalzen tragenden Lager 15, 16 auf. Die Lagerungsvorrichtungen 9, 10, 11 und 12, 13, 14 sind an ihrem anderen Ende untereinander mittels einer Welle 19 verbunden, die über Lager 20, 21 in den Seitenwänden 22, 23 des nicht näher dargestellten Walzenreibmaschinengestells gehalten ist. Wie insbesondere aus Fig. 3 und 4 ersichtlich, weist die Welle 19 an ihren Enden jeweils einen Nocken bzw. einen exzentrischen Zapfen auf, die zueinander entgegengesetzt angeordnet sind. Die exzentrischen Zapfen 24 und 25 sind jeweils in zwei Lagerbüchsen 26, 27 der Lagerungsvorrichtungen 9, 10, 11 und 12, 13, 14 aufgenommen. Eine Drehung von 90° der Welle 19 bewirkt eine ähnliche Drehung des exzentrischen Zapfens 24, der die Lagerungsvorrichtung 9 in Pfeilrichtung F verschiebt, wogegen der exzentrische Zapfen 25 die Lagerungsvorrichtung 12 in die entgegengesetzte Pfeilrichtung F1 schiebt. Daraus erfolgt eine Schwenkung in der Horizontalebene der Längsachse der Raffinierwalze 6 für den Winkelwert α.

Die Achse der Welle 19 und der zugeordneten Raffinierwalze wird an ihren Enden in bezug auf ihre vorherige Stellung verschoben, und zwar einerseits um den Betrag «d», der gleich der Schwingungsweite des exzentrischen Zapfens 24 ist und, auf die andere Seite, um einen gleichen Betrag «d», der gleich der Schwingungsweite des exzentrischen Zapfens 25 ist, weil die zwei exzentrischen Zapfen 24 und 25 gleiche Abmessungen aufweisen.

Die Bewegungen von 90° der exzentrischen Zapfen um die Achse der Welle 19 herum wird durch einen Hebel 28 bestimmt. Der Hebel ist über eine auf einer Schnecke 30 aufgeschraubte Mutter 29 gesteuert, wobei die Schnecke über einen Gleichstrommotor 31 drehbar ist. Dieser Motor kann entweder direkt oder, wie in der Folge näher beschrieben, über einen Steuermikroprozessor 32 gesteuert werden. Mit 33 wird ein Wandler von Digitalsignalen in Analogsignale bezeichnet.

Wie aus Fig. 3 und 4 ersichtlich, erfolgt die Verbindung zwischen dem erwähnten Hebel 28 und der Schraube 29 durch einen durchgehenden schlitzartigen Endsitz 34, der am gabelartigen Ende des Hebels 28 erhalten ist, wobei in jedem Schenkel des gabelartigen Hebelendes zwei entgegengesetzte Haltezapfen der Mutter 29 aufgenommen sind.

In Fig. 5a sind zwei nebeneinanderliegende Raffinierwalzen, z.B. die Walzen 6 und 7 näher dargestellt, deren Längsachsen in der gleichen vertikalen Ebene liegen und die jeweiligen exzentrischen Zapfen 24 sich in ihrer oberen Stellung befinden. Nach einer Drehung dieser Zapfen, bzw. ihrer Welle 19 um 90° werden die exzentrischen Zapfen 24 eine Verschiebung der zugeordneten Lagerungsvorrichtungen 9, 12 und 10, 13, bzw. der diesbezüglichen Halterungsenden der Raffinierwalzen 6 und 7 für einen Betrag «d» bewirken, der gleich der Schwenkungsweite des exzentrischen Zapfens ist. Dies ist aus Fig. 5b ersichtlich. Im dargestellten Beispiel wird man deshalb im Bereich der Enden der Raffinierwalze 6 und 7 einen Versatz derselben für einen Betrag von «2d» haben.

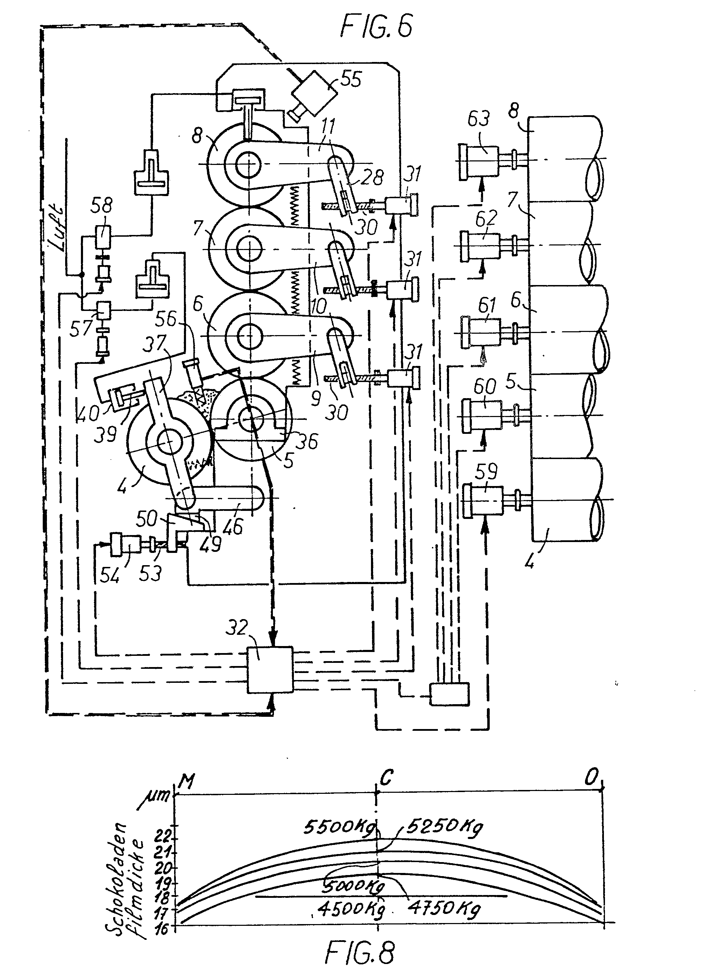

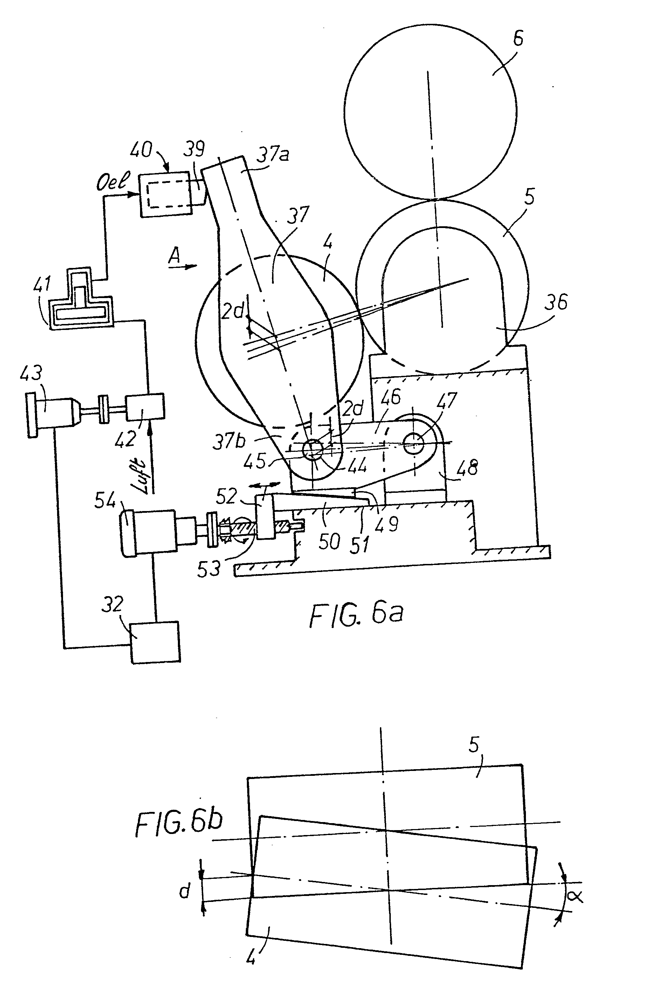

Während im dargestellten Beispiel die Raffinierwalzen 6, 7 und 8 mittels der dargestellten Schwenklagerungsvorrichtungen schwenkbar gehaltert sind, weist die Walze 5 des Einzugswalzenpaars 4 und 5 Endhalterungen 36 auf, die mit dem Walzenreibmaschinengestell fest verbunden sind (Fig. 6). Ihrerseits ist die Einzugswalze 4 im dargestellten Beispiel durch eine Schwenklagerungsvorrichtung verschiebbar gehaltert, die beispielsweise gemäss einer Variante in bezug auf die Schwenklagerungsvorrichtung für die Raffinierwalzen 6, 7 und 8 ausgeführt ist. Die Schwenk- lagerungsvorrichtung der Einzugswalze 4 ist insbesondere den Figuren 6 und 6a entnehmbar. Diese Schwenklagerungsvorrichtung besteht aus zwei Seitenwänden 37, die in ihrem mittleren Bereich die Halterungsenden der Einzugswalze 4 haltern und in ihrem oberen Ende 37a mit einem Rückwirkungsanschlag 39 einer öldynamischen Vorrichtung 40 zusammenarbeitet, die mit dem Walzenreibmaschinengestell fest verbunden und über einen Druckübersetzer 41 steuerbar ist, der seinerseits einer pneumatischen Servosteuerung 42 zugeordnet ist. Im Falle einer zentralisierten Steuerung ist die pneumatische Servosteuerung mit einem über den Mikroprozessor 32 gesteuerten Steuermotor 43 verbunden. In ihren entgegengesetzten Enden 37b weisen die Seitenwände 37 Aufnahmebohrungen 44 auf, die einen Anlenkungszapfen 45 aufnehmen, der seinerseits in entsprechenden Aufnahmesitzen in Seitenwänden 46 gehalten ist. Die genannten Seitenwände 46 sind bei 47 in einer mit dem Walzenreibmaschinengestell fest verbundenen Endhalterung 48 angelenkt. Die schwenkbaren Seitenwände 46 weisen eine nach Art einer schiefen Anschlag- ebene ausgeführte untere geneigte Ebene 49 auf, mit der eine schiefe Steuerebene 50 zusammenarbeitet, die auf einer mit dem Walzenreibmaschinengestell fest verbundenen Tragfläche 51 gleitbar ist. Die Steuerebene 50 ist an einem Ende mit einer Mutter 52 verbunden, die auf einer durch einen elektrischen Umkehrmotor 54 in Drehung versetzbaren Schnecke 53 aufgeschraubt ist. In der Ausführung mit zentralisierter Steuerung ist dieser Motor 54 mit dem Mikroprozessor 32 verbunden. Die Drehung der Schnecke 53 in der einen bzw. in der anderen Richtung bewirkt die Verschiebung der schiefen Steuerebene 50 in der einen bzw. in der anderen Richtung mit nachfolgender Abhebung bzw. Absenkung der schwenkbaren Seitenwände 46 und dadurch der Seitenwände 37 und somit der Einzugswalze 4. Um die Bewegungen weicher zu gestalten, ist es ohne weiteres möglich, Drehungskörper z.B. als Kugel bzw. Walzen zwischen den Gleitflächen einzufügen. In Fig. 6b ist die Schwenkung der Einzugswalze 4 in bezug auf die Einzugswalze 5 dargestellt.

In Fig. 6 ist die Gesamtheit der Schwenklagerungsvorrichtungen der Raffinierwalzen sowie der Luft-Öl-Kreislauf und die motorisierten Druckregler für die Kontrolle und die Steuerung des Halterungsdruckes des Einzugswalzenpaares 4 und 5 sowie des Halterungsdruckes der Raffinierwalzen 6, 7 und 8. In Fig. 6 sind ferner mit 55 und 56 jeweils ein Kolorimeter und ein Viskosimeter bezeichnet. Dieselben liefern eine Bezugsgrösse, die jeweils die Dicke des erzeugten Schokoladenfilms und die Viskosität der gespeisten Schokoladenladung darstellen, um somit einen Bezugsparameter für die zentralisierte Steuerung der Walzenreibmaschine zu haben. Die Wahl des Kolorimeters bzw. des Viskosimeters ist frei. Ein geeigneter Kolorimeter ist durch die italienische Patentanmeldung der Anmelderin Nr. 20 718 A/83, eingereicht am 21.04.1983, offenbart. Der Kolorimeter hat die Aufgabe einer Steuereinheit, vorteilhafterweise einem Mikroprozessor, ausgewertete Farbenwerte des erzeugten Schokoladenfilms, die indirekterweise die Dicke des Schokoladenfilms darstellen, zuzuleiten. Mittels dieser Werte wird die wirkliche Dicke des erzeugten Schokoladenfilms auf die ganze Breite desselben bzw. gegebenenfalls die Anwesenheit der sogenannten «trockenen Bahnen» geprüft bzw. überwacht. Bei der Walzenreibmaschine der oben erwähnten italienischen Patentanmeldung dienen die ausgewerteten optischen Lesesignale zur Steuerung des Halterungsdruckes der Raffinierwalzen. Bei der vorliegenden Erfindung dienen dieselben zur Steuerung des Mikroprozessors 32. Diese Steuerung könnte auch, ausgehend von den vom Viskosimeter 56 ausgegebenen Signalen erfolgen, wobei das Viskosimeter dem Einzugswalzenpaars 4, 5 vorgeschaltet vorgesehen wird.

Beim Einsetzen des Kolorimeters bedeutet die Ermittlung einer dunkleren Farbennuance eine grössere Dicke in bezug auf hellere Farbnuancen. Sollte während der Betriebsweise der Walzenreibmaschine ein dunklerer Bereich im mittleren Teil des erzeugten Schokoladenfilms ermittelt werden, so könnte dies entweder einen ungenügenden Druck an den Raffinierwalzen oder eine zu kleine Balligkeitswert oder auch beide diese Ursachen bedeuten. Um die gewünschten Betriebsbedingungen erneut einzustellen, wird man dann eine Druckzunahme über die Regler 57, 58 (Fig. 6) bewirken und, wenn diese Eingriffsmassnahme ungenügend sein sollte, so wird man den Wert der Balligkeitswirkung vergrössern, indem man auf die Schwenklagerungsvorrichtungen über die Steuerungen 54 und 31 so lange eingreift, bis der Farbton des erzeugten Schokoladenfilms erneut gleichmässig auf die ganze Breite desselben ermittelt wird.

Es wird hervorgehoben, dass bei der Behandlung von sehr viskosen Schokoladenteigen bzw. beim Eintreten einer Viskositätszunahme der zu raffinierenden Schokoladenmasse bzw. -Ladung man zuerst den Druck der ersten Einzugswalze 4 vergrössern soll. Reicht diese Eingriffsmassnahme zur Erzielung der gewünschten Feinheit nicht, so wird man dann auf die Geschwindigkeit der genannten Einzugswalze 4 eingreifen, indem man dieselbe herabsetzt und gegebenenfalls wird auch proportionalmässig die Geschwindigkeit der nachfolgenden Raffinierwalzen herabgesetzt.

Beim Feststellen eines erzeugten Schokoladenfilms, der in seinem mittleren Bereich eine grössere Feinheit als erwartet aufweist, muss man den Balligkeitswert auf der ersten Raffinierwalze 6 und, falls erforderlich, ebenfalls proportionalgemäss den Balligkeitswert der übrigen Raffinierwalzen vergrössern.

In Anwesenheit eines sehr flüssigen Schokoladenteigs muss man dagegen in bezug auf die oben erwähnten Regulierungen für sehr viskose bzw. dickflüssige Schokoladenteige gegenteilige Regulierungen bewirken.

Es wird hervorgehoben, dass es für die Erzielung einer Leistungszunahme genügen wird, die Geschwindigkeit der den Walzen 4–8 zugeordneten stufenlosen Getriebe 59, 60, 61, 62, 63 zu erhöhen, wobei jedoch die Geschwindigkeitsverhältnisse unberührt bleiben. In der Tat entspricht einer Einzugsgeschwindigkeitszunahme eine grössere Entnahme von Schokoladenteig seitens des Einzugswalzenpaars 5, 6 und dadurch eine grössere Dicke des Schokoladenfilms auf den ganzen Raffinierwalzen, einbegriffen die letzte Austragswalze 8, wo vorteilhafterweise die Dickenzunahme vom erwähnten Kolorimeter 55 signalisiert und überwacht wird.

Die durch die erfindungsgemässe Walzenreibmaschine. ermöglichten Eingriffe auf den Druck, die Geschwindigkeit bzw. die Balligkeit können entweder manuell, d.h. durch manuelle Betätigung der entsprechenden Steuerorgane oder auch mittels einer zentralisierten Steuerung über einen Mikroprozessor durchgeführt werden. Die Anwendung eines Mikroprozessors gestattet eine vollständige Automatisierung der Walzenreibmaschine, deren Betriebsweise deshalb z.B. mittels Steuerkarten bzw. Steuerprogrammen in Abhängigkeit der verschiedenen zu raffinierenden Schokoladentypen bzw. -teige gesteuert werden kann.

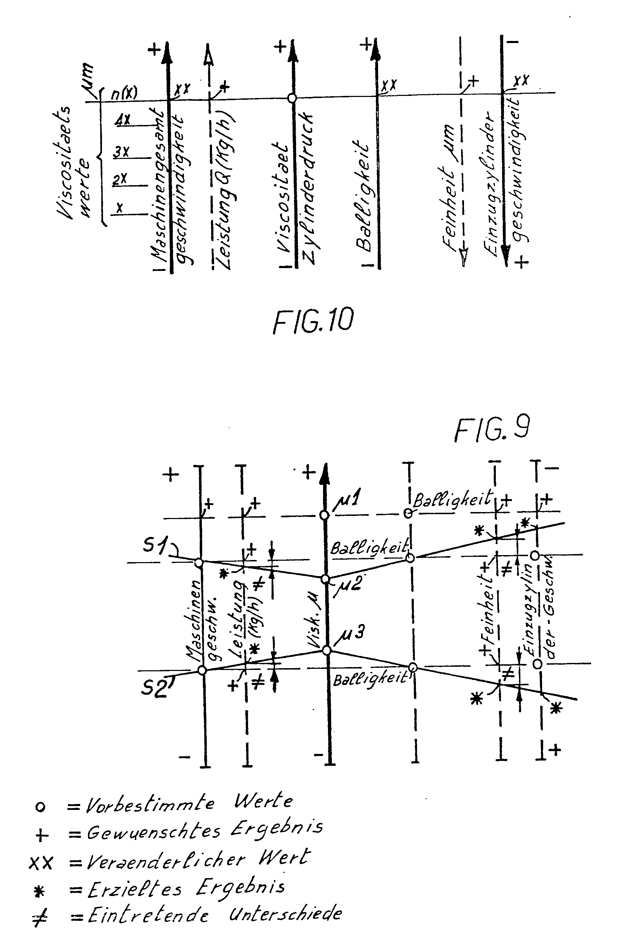

In Fig. 7 wird ein Schaubild wiedergegeben, das die zwischen der Viskosität bzw. Plastizität (ausgedrückt in Prozent des im Schokoladenteig enthaltenen Fettes) eines zu raffinierenden Schokoladenteigs, dem an die Raffinierwalzenlager anzulegenden Druck in kg, sowie der Balligkeitssumme, die ein Raffinierwalzenpaar aufweisen muss, damit die entgegengesetzten Raffinierwalzenerzeugenden während des Betriebs, d.h. wenn dieselben einer bestimmten Drucklast «P» unterzogen sind, genau zueinander parallel bleiben, bestehende Beziehung im Prinzip darstellt.

Fig. 8 gibt die Druckwerte des auf der Austragwalze 8 ausgetragenen Schokoladenfilms an, welche Dickenwerte beispielsweise bei einer bekannten mit eine feste Balligkeit aufweisenden Raffinierwalzen versehenen Walzenreibmaschine sowie in Anwesenheit eines gleichmässigen bzw. für die Mess- bzw. Ermittlungszeitspanne eine gleichbleibende Viskosität aufweisenden Schokoladenteigs und bei verschiedenen Druckwerten, wie dargestellt, ermittelt wurden. Die Seite M stellt die Motorseite dar, der mittlere Bereich ist mit C und die der Motorseite entgegengesetzte Seite ist mit O bezeichnet. Die Strecke M–O stellt die Raffinierwalzenlänge dar. Diesem Schaubild ist entnehmbar, dass bei einem Druck von 4500 kg eine auf die ganze Walzenbreite gleichmässige Schokoladenfilmdicke von 18 µm erzielt wird.

Will man den Druckwert erhöhen, um eine grössere Feinheit des Schokoladenfilms zu erzielen, so wird in der Praxis eine tatsächliche Herabsetzung der Feinheit im Bereich der Schokoladenfilmseiten bewirkt und dagegen im mittleren Bereich des Schokoladenfilms eine Dickenzunahme festgestellt, die auf eine fortschreitende Durchbiegung der vorgesehenen Raffinierwalzenpaare bei ihren entgegengesetzten Raffinierwalzenerzeugenden zurückzuführen ist.

Um die verschiedenen Beeinflussungen der verschiedenen Parameter auf die Betriebsweise der Walzenreibmaschine besser hervorzuheben, wurden in Fig. 9 und 10 die zwischen den verschiedenen bezüglich der Regelungs- bzw. Einstelleingriffe zu betrachtenden Parametern, d.h. der Viskosität, der Balligkeit und dem Druck in Verbindung mit anderen ein besonderes Interesse aufweisenden Schokoladenparametern, wie z.B. der Schokoladenfeinheit sowie mit Betriebsparametern, wie der Geschwindigkeit der ersten Einzugswalze, der Walzenreibmaschinenleistung in kg/h und der Viskosität der Ausgangsschokolade bestehenden Beziehungen graphisch dargestellt.

Die zur Erzielung der gewünschten Betriebsweise erforderlichen Bedingungen sind auf einer beispielsweisen Geraden angegeben. Die einzelnen Symbole bedeuten dabei:

o = vorbestimmte Werte
+ = gewünschtes Ergebnis
xx = veränderlicher Wert
* = tatsächlich erzielte Ergebnisse
≠ eintretende Unterschiede

Bei der Zusammensetzung der Schaubilder wurden ferner die folgenden zwischen den verschiedenen Parametern bestehenden Beziehungen von Funktion f betrachtet:

Leistung Q = f Geschwindigkeit des Einzugswalzenpaars,
Viskosität = f Balligkeit und Maschinengeschwindigkeit,
Balligkeit = f Walzendruck,
Feinheit = f Geschwindigkeit des Einzugswalzenpaars und der Raffinierwalzen.

Die vollen Linien stellen die einstellbaren und die gestrichelten Linien die konsequenten Parameter dar. In Fig. 9 sind mit den gebrochenen Linien S1 und S2 die beim Variieren der Viskosität $\mu_2$ und $\mu_3$ des gespeisten Schokoladenteigs, und zwar im Falle einer Herabsetzung (S1) und einer Zunahme (S2) der Viskosität, prinzipiell eintretenden Änderungen für die verschiedenen betrachteten Parameter dargestellt.

Die Abstände zwischen den einzelnen Punkten der gebrochenen Linien und der Geraden der gleichmässigen Betriebsweise, die die Gesamtbedingungen für die jeweils gewünschte Betriebsweise aufweist, stellen die prinzipiellen Abweichungen der diesbezüglichen Parameter dar.

Die Beziehung zwischen Walzenballigkeit und Viskosität ist aus Fig. 11 ersichtlich. Es wird hervorgehoben, dass der Raffinierdruck dem Dickenunterschied zwischen der vor und nach jedem Raffinierwalzenpaar vorliegenden Schokoladenfilmdicke direkt proportional ist.

Beim Zunehmen der Schokoladenviskosität nimmt ebenfalls die Dicke der auf die Einzugswalzen anhaftenden Schokoladenschicht und dadurch ebenfalls den erwähnten Dickenunterschied, d.h. den von der Schokolade auf beiden Walzen ausgeübten Druck zu. Um gleichförmige Feinheiten zu erzielen, wird man deshalb den Balligkeitswert erhöhen.

In Fig. 12 ist angegeben, dass beim Erhöhen der Raffinierwalzen – unter Konstanthaltung der Zahnräderverhältnisse zwischen denselben – die Leistung pro Stunde erhöht wird. Diese Zunahme ändert jedoch in Abhängigkeit von der Schokoladenviskosität.

Dem obengesagten in bezug auf die Beschreibung der vorgeschlagenen Ausführungsformen sowie auf die Betriebsweise der erfindungsgemässen Walzenreibmaschine ist entnehmbar, dass mit der erfindungsgemässen Walzenreibmaschine es ohne weiteres möglich ist, die der vorliegenden Erfindung zugrunde gelegte Aufgabe wirksam zu lösen und die im Einleitungsteil erwähnten Vorteile zu erzielen. Insbesondere wird eine Walzenreibmaschine geschaffen, die eine äusserst elastische Betriebsweise aufweist und in der Lage ist, in der Praxis jeden Schokoladenteig bei den jeweils gewünschten Bedingungen zu verarbeiten. Solche Anpassungen können sowohl manuell oder mit einer computerisierten Steuerung durchgeführt werden.

In der Praxis ist es ohne weiteres möglich, einzelne Bestandteile durch andere technisch und/ oder funktionell gleichwertige Bestandteile zu ersetzen, sowie Servosteuerungen jedes geeigneten Typs einzusetzen, ohne dadurch den Schutzbereich vorliegender Erfindung zu verlassen.

Auch die Schwenklagerungsvorrichtungen für die verschiedenen Walzen können anders als die zwei beispielsweise angegebenen Ausführungsformen gestaltet werden, ohne ebenfalls den Schutzbereich vorliegender Erfindung zu verlassen.

Wesentlich für die Erfindung ist die Möglichkeit, die drei Eingriffsmöglichkeiten bezüglich des Walzendrucks, der Walzengeschwindigkeit und der Walzenballigkeit, die entweder einzeln oder in beliebiger Kombination zu einander eingesetzt werden können, vorzusehen.

Wesentlich ist ferner die Anwendung einer zentralisierten Steuerung mit Mikroprozessor, mit dem Zweck, eine Betriebsweise zu schaffen, die einerseits vollkommen automatisierbar und andererseits in der Lage ist, die jeweils für Ausgangsmaterialien verschiedenen Typs erforderlichen Ergebnisse zu liefern.

Obwohl man in der Beschreibung Bezug auf Schokolade genommen hat, ist es selbstverständlich, dass die erfindungsgemässe Walzenreibmaschine für jedwede Mischung bzw. Suspension im viskosen Zustand bei jeder rheologischen nicht-Newtonschen Kennlinie desselben, wie z.B. im Falle von Tinten, Firnissen usw., eingesetzt werden kann.

Alle der Beschreibung, den Ansprüchen sowie den Zeichnungen entnehmbaren Merkmale sind für die vorliegende Erfindung sowohl einzeln als auch in beliebiger Kombination zueinander als erfindungswesentlich zu betrachten.

**Patentansprüche**

1. Walzenreibmaschine für eine rheologische nicht-Newtonsche Kennlinie aufweisende Mischungen und Suspensionen, z.B. Schokolade, Tinten, Lacke u. dgl., enthaltend, in einem Walzenreibmaschinengestell gelagert, ein Einzugswalzenpaar zur Zuführung des zu raffinierenden Schokoladenteigs sowie eine Vielzahl von Raffinierwalzen und Antriebsmittel für die letzteren, dadurch gekennzeichnet, dass sie enthält:
a) Balligkeitsveränderungsmittel (9–11, 12–14, 19, 24, 25, 28–31), die fähig sind, eine Veränderung der wirklichen Balligkeit bzw. einer gleichwertigen Balligkeitswirkung auf die Raffinierwalzen (6–8; 4, 5) zu bewirken, wobei die Balligkeitsveränderungsmittel aus einer Schwenklagerungsvorrichtung (9–11, 12–14, 19, 24, 25, 28–31; 37, 39, 45–50, 52–54), einer zugeordneten Raffinierwalze (6–8; 4, 5) bestehen, welche Schwenklagerungsvorrichtung fähig ist, der an und für sich ohne Balligkeit ausgeführten zugeordneten Raffinierwalze (6–8; 4, 5) eine solche Schwenkbewegung zu erteilen, dass diese Raffinierwalze (6–8; 4, 5) eine in bezug auf eine benachbarte Raffinierwalze (6–8; 4, 5) winklige Stellung (α) mit untereinander in Berührung kommenden mittleren Bereichen bzw. Kreislinien und voneinander entfernten Raffinierrollenenden erfährt,
b) Geschwindigkeitsveränderungsmittel (59–63), die fähig sind, eine Geschwindigkeitsveränderung der genannten Raffinierwalzen (4–8) zu bewirken, wobei dieselben für jede Raffinierwalze (4–8) aus einem eigenen unabhängigen und für sich regelbaren Antrieb (59–63), wie z.B. ein mechanisches, stufenloses Getriebe, ein Gleichstrommotor, eine Ausdehnungsriemenscheibe usw. bestehen, und
c) Druckveränderungsmittel (57, 58), die fähig sind, eine Druckveränderung bei den Halterungslagern der Raffinierwalzen (4–8) zu bewirken, wobei den Balligkeits-, Geschwindigkeits- und Druckveränderungsmitteln (9–11, 12–14, 19, 24, 25, 28–31; 3 und 59–63 und 57, 58) Betätigungsmittel zur Einzel- bzw. Kombinationsdurchführung der erforderlichen Regeleingriffe auf die genannten Veränderungsmittel (9–11, 12–14, 19, 24, 25, 28–31; 3 und 59–63 und 57, 58) zur Veränderung des Druckes, der Geschwindigkeit und der Balligkeit der Raffinierwalzen (6–8; 4, 5) zugeordnet sind, wobei Steuermittel mit Mikroprozessor (32) zur zentralisierten Steuerung sowie Messvorrichtungen (55; 56) zur Messung eines Bezugsparameters, z.B. der Dicke oder Viskosität des erzeugten Schokoladenfilms vorzugsweise vorgesehen sind.

2. Walzenreibmaschine nach Anspruch 1, dadurch gekennzeichnet, dass die Schwenklagerungsvorrichtung einer jeden Raffinierwalze (6–8) jeweils aus zwei Seitenhalterungen (9–11, 12–14) bestehen, die an einem Ende über die Zwischenschaltung von Lagern (15, 16) die Halterungsenden (17, 18) der genannten Raffinierwalze (6–8) tragen und am anderen Ende jeweils einen Nokken bzw. einen exzentrischen Zapfen (24, 25) aufweisen, die zueinander als Wellenenden einer Verbindungswelle (19) entgegengesetzt erhalten sind, die ihrerseits unter Zwischenschaltung von Lagern (20, 21) in den Seitenwänden (22, 23) der Walzenreibmaschine getragen ist, wobei der eine Nocken (24, 25) in einer an einem Ende eines Y-förmigen Hebels (28) vorgesehenen Lagerbüchse (26, 27) aufgenommen ist, welcher Y-förmige Hebel (28) in den beiden Schenkeln seines U-förmigen Hebeteils jeweils einen Lagerzapfen (35) einer auf einer einem Antriebsmotor (31) zugeordneten Antriebsschraube (30) aufgeschraubten Mutter (29) trägt, so dass die Bewegung der genannten Mutter (29) eine Schwenkbewegung der genannten durchgehenden Welle (19) und über die Nocken (24, 25) diese Welle (19) eine Schwenkverschiebung der genannten Lager (9–11, 12–14) der zugeordneten Raffinierwalze (6–8) bewirkt.

3. Walzenreibmaschine nach Anspruch 1, dadurch gekennzeichnet, dass die Veränderungsmittel zur Veränderung der gleichwertigen Balligkeit der Raffinierwalzen (4, 5) aus zwei die Lagerungsenden einer zugeordneten Raffinierwalze (4) tragenden und an ihrem Oberenden (37a) mit einem Reaktionsanschlag (39), z.B. öldynamischer Art, zusammenarbeitenden Seitenwänden (37) bestehen, die an ihren Unterenden (37b) jeweils an einer schwenkbaren Seitenwand (46) angelenkt (45) sind, welche ihrerseits am Walzenreibmaschinengestell angelenkt (47) sind und an ihrer Unterseite eine nach Art einer schiefen Ebene gestaltete Anschlagfläche (49) aufweist, wobei mit dieser Anschlagfläche (49) eine ebenfalls nach Art einer schiefen Ebene gestaltete Steuerfläche (50) zusammenarbeitet, die der Mutter (52) einer über einen Reversiermotor (54) antreibbaren Antriebsschraube (53) zugeordnet ist, so dass die Hin- und Herbewegungen der genannten Steuerfläche (50) eine Abhebung oder Absenkung der Anschlagfläche (49) bzw. eine Schwenkung der getragenen Raffinierwalze (4) in bezug auf die benachbarte Raffinierwalze (5) bewirken.

4. Walzenreibmaschine nach einem oder mehreren der vorhergehenden Ansprüche, dadurch gekennzeichnet, dass eine Messvorrichtung (55, 56) zur Messung eines einen Bezugparameter, wie z.B. die Feinheitsgrade bzw. -dicke, die Viskosität des zu raffinierenden Produktes usw. darstellenden Parameters vorgesehen ist.

5. Walzenreibmaschine nach einem oder mehreren der vorhergehenden Ansprüche, dadurch gekennzeichnet, dass ein Mikroprozessor (32) zur zentralisierten Steuerung der auf die von der Walzenreibmaschine regelbaren Parameter d.h. den Walzenlagerdruck, die Walzengeschwindigkeit und -balligkeit auszuübenden Betriebskorrektureneingriffe enthält, so dass das einwandfreie Raffinieren von verschiedenen Schokoladentypen bzw. -mischungen unabhängig von deren chemisch-physikalischen Ausgangsmerkmalen bzw. beim Variieren derselben während des Betriebes ermöglicht wird.

6. Walzenreibmaschine nach Anspruch 1 und 4, dadurch gekennzeichnet, dass sie eine Messvorrichtung (55) zum unmittelbaren oder mittelbaren Messen der hergestellten Schokoladenfilmdicke enthält.

7. Walzenreibmaschine nach Anspruch 1 und 8, dadurch gekennzeichnet, dass sie ein Viskosimeter (56) zur kontinuierlichen Messung der zu raffinierenden Schokoladenteigviskosität enthält.

**Claims**

1. A grinding roll refiner for mixtures and suspensions having a non-Newtonian rheological characteristic, e.g. chocolate, inks, varnish and the like, containing, mounted in a grinding roll refiner frame, a pair of entry rolls for supplying the chocolate paste for refining, and a plurality of refining rolls and drive means for the latter, characterised in that it contains:

a) Camber variation means (9–11, 12–14, 19, 24, 25, 28–31), adapted to effect a variation of the actual camber or of an equivalent camber effect on the refining rolls (6–8; 4, 5) the camber variation means consisting of a rocking mounting device (9–11, 12–14, 19, 24, 25, 28–31; 37, 39, 45–50, 52–54) of an associated refining roll (6–8; 4, 5), said rocking mounting device being adapted to impart to the associated refining roll (6–8; 4, 5), which is of itself constructed without a camber, a rocking movement such that said refining roll (6–8; 4, 5) experiences an angular position (α) with respect to an adjacent refining roll (6–8; 4, 5) with middle zones or circular lines which come into contact with one another, and refining roll ends which are distant from one another,

b) Speed variation means (59–63) adapted to effect a speed variation of the said refining rolls (4–8), said means consisting, for each refining roll (4–8), of a separate independent and individually variable drive (59–63) such as, for example, a mechanical infinitely variable transmission, a d.c. motor, an expansion belt pulley, and so on and

c) Pressure variation means (57, 58) adapted to effect a pressure change at the mounting bearings of the refining rolls (4–8), the camber, speed and pressure variation means (9–11, 12–14, 19, 24, 25, 28–31; 3 and 59–63, and 57, 58) having associated actuating means for separate or combined performance of the necessary control operations on the said variation means (9–11, 12–14, 19, 24, 25, 28–31; 3 and 59–63 and 57, 58) for varying the pressure, speed and camber of the refining rolls (6–8; 4, 5) control means preferably being provided with a microprocessor (32) for centralized control and measuring devices (55; 56) for measuring a reference parameter, e.g. the thickness or viscosity of the chocolate film produced.

2. A grinding roll refiner according to claim 1, characterised in that the rocking mounting device for each refining roll (6–8) consists of two side mountings (9–11, 12–14) which at one end, through the interposition of bearings (15, 16) bear the mounting ends (17, 18) of the said refining roll (6–8) and at the other end each have a lug or an eccentric pin (24, 25), which are held in opposite directions to one another as the ends of a connecting shaft (19) which is in turn carried, through the interposition of bearings (20, 21), in the side walls (22, 23) of the grinding roll refiner, one lug (24, 25) being received in a bearing bush (26, 27) provided at one end of a Y-shaped lever (28), which latter bears in each of the two limbs of its U-shaped lifting part a trunnion (35) of a nut (29) screwed on a drive screw (30) associated with a drive motor (31), so that the movement of said nut (29) effects a rocking movement of the said continuous shaft (19) and, by way of the lugs (24, 25) said shaft (19) effects a rocking displacement of the said bearings (9–11, 12–14) of the associated refining roll (6–8).

3. A grinding roll refiner according to claim 1, characterised in that the means for varying the equivalent camber of the refining rolls (4, 5) consist of two side walls (37) which bear the mounting ends of an associated refining roll (4) and which at their top ends (37a) co-operate with a reaction abutment (39), e.g. of oleo-dynamic type, and which at their bottom ends (37b) are each articulated (45) on a rockable side wall (46), which side walls are in turn articulated (47) on the grinding roll refiner frame, and have at the bottom an abutment surface (49) formed after the style of an inclined plane, a control surface (50) which is also formed after the style of an inclined plane co-operating with said abutment surface (49) and having associated with it the nut (52) of a drive screw (53) drivable by a reversing motor (54) so that the reciprocating movements of the said control surface (50) cause a raising or lowering of the abutment surface (49) or a rocking of the carried refining roll (4) with respect to the adjacent refining roll (5).

4. A grinding roll refiner according to one or more of the preceding claims, characterised in that a measuring device (55, 56) is provided for measurement of a parameter representing a reference parameter, e.g. the degree of fineness or thickness, or the viscosity of the product etc. for refining.

5. A grinding roll refiner according to one or more of the preceding claims, characterised in that a microprocessor (32) contains operational correction actions which are to be performed for centralized control of the parameters variable by the grinding roll refiner, i.e. roll bearing pressure, roll speed and camber, so that perfect refining of different types or mixture of chocolate is made possible irrespective of their initial chemico-physical features or in the event of the same varying during operation.

6. A grinding roll refiner according to claims 1 and 4, characterised in that it contains a measuring device (55) for the direct or indirect measurement of the chocolate film thickness produced.

7. A grinding roll refiner according to claims 1 and 8, characterised in that it contains a viscosimeter (56) for continuous measurement of the chocolate paste viscosity for refining.


**Revendications**

1. Machine de raffinage à cylindres pour mélanges et suspensions présentant une caractéristique rhéologique non Newtonnienne, par exemple le chocolat, les encres, les peintures et analogues, comprenant, disposés dans un châssis de machines de raffinage à cylindres, une paire de cylindres d'alimentation pour l'introduction de la pâte de chocolat à raffiner ainsi qu'un certain nombre de cylindres de raffinage et de moyens d'entraînement pour ceux-ci, qui est caractérisée en ce qu'elle contient:
a) des moyens de modification du bombement (9 à 11, 12–14, 19, 24, 25, 28 à 31), qui sont capables de réaliser une modification du bombement réel ou d'exercer un effet de bombement équivalent sur les cylindres de raffinage (6–8; 4, 5), ces moyens consistant en un dispositif de logement pivotant des paliers (9–11, 12–14, 19, 24, 25, 28–31; 37, 39, 45–50, 52–54) d'un cylindre de raffinage correspondant (6–8; 4, 5), ce dispositif étant capable de communiquer au cylindre de raffinage (6–8; 4, 5) dépourvu de bombement un mouvement de pivotement tel que ce cylindre de raffinage (6–8; 4, 5) prend une position angulaire (α) par rapport à un cylindre de raffinage voisin (6–8; 4, 5), ces deux cylindres comportant alors des zones ou des circonférences moyennes en contact mutuel et des extrémités distantes les unes des autres,
b) des moyens de modification de la vitesse (59–63), qui sont capables de modifier la vitesse desdits cylindres de raffinage (4–8), ces moyens consistant, pour chaque cylindre de raffinage (4–8) en un entraînement individuellement indépendant et réglable (49–63), tel que par exemple un engrenage mécanique continu, un moteur à courant continu, une poulie extensible, etc., et
c) des moyens de modification de la pression (57–58) qui sont capables de modifier la pression au niveau des paliers de fixation des cylindres de raffinage (4–8), des moyens d'actionnement pour la réalisation isolée ou combinée des opérations de réglage nécessaires sur les moyens de modification cités (9–11, 12–14, 19, 24, 25, 28–31; 3 et 59–63 et 57, 58) pour modifier la pression, la vitesse et le bombement des cylindres de raffinage (6–8; 4, 5) étant adjoints aux moyens de modification du bombement, de la vitesse et de la pression, et des moyens de commande à microprocesseur (32) pour la commande centralisée ainsi que des dispositifs de mesure (55; 56) pour la mesure d'un paramètre de référence, par exemple l'épaisseur ou la viscosité de la couche de chocolat produite étant prévus de préférence.

2. Machine de raffinage à cylindres selon la revendication 1, caractérisée en ce que le dispositif de logement pivotant des paliers de chaque cylindre de raffinage (6–8) consiste en deux fixations latérales (9–11, 12–14), qui portent à une extrémité, par l'intermédiaire de paliers (15, 16) les extrémités de fixation (17, 18) des cylindres de raffinage cités (6–8), et à l'autre extrémité un ergot et un pivot excentrique (24, 25) qui, opposés l'un à l'autre constituent les extrémités d'un arbre de liaison (19) qui est lui-même supporté par l'intermédiaire de paliers (20, 21) dans les parois latérales (22, 23) de la machine de raffinage à cylindres, l'une des cames (24, 25) étant reçue dans un coussinet (26, 27) prévu à une extrémité d'un levier (28) en forme de Y, ce levier (28) en forme de Y portant dans les deux branches de sa partie en forme de U un pivot de palier (35) d'un écrou (29) vissé sur une vis sans fin d'entraînement (30) associée à un moteur d'entraînement (31), de sorte que le mouvement dudit écrou (29) provoque un mouvement de pivotement dudit arbre (19) et que, par l'intermédiaire des cames (24, 25) cet arbre (19) provoque un déplacement de pivotement desdits paliers (9–11, 12–14) des cylindres de raffinage correspondants (6–8).

3. Machine des raffinage à cylindres selon la revendication 1, caractérisée en ce que les moyens de modification pour modifier le bombement équivalent des cylindres de raffinage (4, 5) consistent en deux parois latérales (37) qui portent les extrémités de logement d'un cylindre de raffinage associé (4) et qui à leurs extrémités supérieures (37a) coopèrent avec une butée de réaction (39), par exemple du type oléodynamique, lesdites parois latérales étant articulées (45) à leurs extrémités inférieures (37b) à une paroi latérale (46) pivotante, qui est elle-même articulée (47) au châssis de la machine de raffinage à cylindres et qui présente à sa partie inférieure une surface de butée (49) sous forme d'un plan incliné, une surface de commande (50) également sous forme d'un plan incliné coopérant avec cette surface de butée (49), cette surface de commande étant associée à l'écrou (52) d'une vis sans fin (53) qui peut être actionnée par un moteur réversible (54), de sorte que les mouvements de va-et-vient de ladite surface de commande (50) provoquent un soulèvement ou un abaissement de la surface de butée (49) et un pivotement du cylindre de raffinage supporté (4) par rapport au cylindre de raffinage voisin (5).

4. Machine de raffinage à cylindres selon une ou plusieurs des revendications précédentes, caractérisée en ce qu'un dispositif de mesure (55, 56) est prévu pour mesurer un paramètre qui représente un paramètre de référence, comme par exemple le degré de finesse ou le degré d'épaisseur, ou la viscosité du produit à raffiner.

5. Machine de raffinage à cylindres selon une ou plusieurs des revendications précédentes, caractérisée en ce qu'elle contient un microprocesseur (32) pour la commande centralisée des actions de correction du fonctionnement à exercer sur les paramètres réglables de la machine de raffinage à cylindres c'est-à-dire la pression des paliers de cylindres, la vitesse et le bombement des cylindres, de sorte qu'il est possible de réaliser un raffinage irréprochable de différents types ou mélanges de chocolat, indépendamment de leurs caractéristiques chimiques et physiques de départ ou lors de variations de celles-ci au cours du fonctionnement.

6. Machine de raffinage à cylindres selon les revendications 1 et 4, caractérisée en ce qu'elle contient un dispositif de mesure (55) pour mesurer directement ou indirectement l'épaisseur de la nappe de chocolat fabriquée.

7. Machine de raffinage à cylindres selon les revendications 1 et 8, caractérisée en ce qu'elle contient un viscosimètre (56) pour la mesure continue de la viscosité de la pâte de chocolat à raffiner.

FIG.2

FIG.2c

FIG.2b

FIG.2a

FIG.1

FIG.1c

FIG.1b

FIG.1a

13

FIG.3

FIG.4

FIG.7

Belastung "P" zu den Zylinderlagern

Zylinderballigkeit

Fett % im Teig (Plastizitaet)-Viscositaet

0130 278

FIG.5a

FIG.5b

FIG.11

FIG.12

$\mu_4 > \mu_3 > \mu_2 > \mu_1$

$\mu$ = Viscositaetswert

Leistung Kg/h

Geschwindigkeit

Viscositaet

Zylinderbeflügkeit

FIG. 6

Luft

FIG. 8

FIG. 6a

FIG.6b

**FIG.10**

**FIG.9**

o = Vorbestimmte Werte

+ = Gewuenschtes Ergebnis

xx = Veraenderlicher Wert

∗ = Erzieltes Ergebnis

≠ = Eintretende Unterschiede